# EUROPEAN PATENT APPLICATION

(11) **EP 1 997 391 A2**
(43) Date of publication of application: **03.12.2008**
(21) Application number: 08425345.9
(22) Date of filing: 16.05.2008
(51) Int. Cl.: A23N 15/12, B65G 47/24

(54) **Machine for automatic cutting of green beans**

(30) Priority: 29.05.2007 IT RM20070294
(71) Applicant: Turatti s.r.l., 30014 Cavarzere (VE) (IT)
(72) Inventor: Turatti, Antonio, Turatti S.r.l., 30014 Cavarzere (VE) (IT)
(74) Representative: Iannone, Carlo Luigi

(57) **Abstract**

The invention concerns a maschine for automatic cutting of green beans, said machine being characterized in that it provides an apparatus for loading green beans, an apparatus for aligning green beans and blade cutting means for cutting both ends of green beans that have been properly orientated beforehand.

## Description

The present invention relates to a machine for automatic cutting of green beans.

More specifically, the invention concerns an apparatus of the above kind permitting automatically obtaining, without any manual operation, trimming of green beans.

As it is well known, in the field of apparatuses and systems for working fruit and vegetables, trimming of green beans (*Phasoleus vulgaris*) has always been an operation requiring a large labor, thus substantially increasing cost of finished product.

Green beans are since many years available on the market within a can or jar, already cooked and sterilized.

Apparatuses are employed for their manufacturing that are reliable but that, due to their structure, damage the product. This drawback is not noticed in cooked and sterilized product, but it cannot be accepted in fresh and deep-frozen product.

Therefore, while preparing this 4^{th} gamma fresh product, cutting or trimming phase is carried by hand. It is obviously a very long and troublesome procedure, remarkably increasing costs of final product.

Green bean has on one side a tough petiole and on the other side a pointed, tough, end, disgusting to chew. When preparing green beans, in order to obtain a high quality product, two ends must be eliminated by a sharp blade.

In view of the above, the Applicant has realized a machine permitting fully automatically realizing trimming of green beans, satisfying requirements necessary to obtain a product with optimum features.

These and other results are obtained according to the present invention suggesting a cutting apparatus that, differently with respect to the existing ones, carries out cut of two green bean ends by a rotating blade, leaving separation interface intact and a final product with a quality that can be compared with that of the hand cut product.

It is therefore specific object of the present invention a machine for automatic cutting of green beans, said machine being characterized in that it provides blade cutting means for cutting both ends of green beans that have been properly orientated beforehand.

According to the invention, said machine provides, upward, a product loading apparatus and an apparatus for aligning product orthogonal with respect to the advancement axis of the same product, and downward a collection apparatus.

Still according to the invention, said cutting means provide cups for cutting the product, said cups being movable along motion means, that can be oriented perpendicular with respect to motion axis of said motion means, at least a cutting section, for cutting the two ends of green bean, and a discharge section for discharging finished product.

Particularly, said motion means are comprised of a chain.

Furthermore, said cups can take different positions in the different working sections provided along the machine axis.

Particularly, orientation of cups is determined by chain guides mounted on the edges of said cups, with an axis parallel with respect to the chain motion axis.

Still according to the invention, said at least a cutting head is comprised of two circular blades operated by a motor (said blades rotating according to opposite directions).

Preferably, according to the invention, two cutting heads are provided, one for each end, and provided on opposite sides of the machine, eventually each provided with discharge means for cut tips or ends.

Further, according to the invention, said alignment apparatus provides a vibrating plane with a shaped plane having a plurality of V shaped deep grooves or alveoli according to the product motion direction.

Present invention will be now described for illustrative and not limitative purposes according to preferred embodiments, with particular reference to the figures of the enclosed drawings, wherein,
figure 1 is a total schematic view of a system with the machine according to the invention;
figure 2 shows a particular of the vibrating plane or table of machine of figure 1;
figure 3 shows an assembly view of cutting machine according to the invention; and
figure 4 shows a detail of transportation cups of the machine according to the invention.

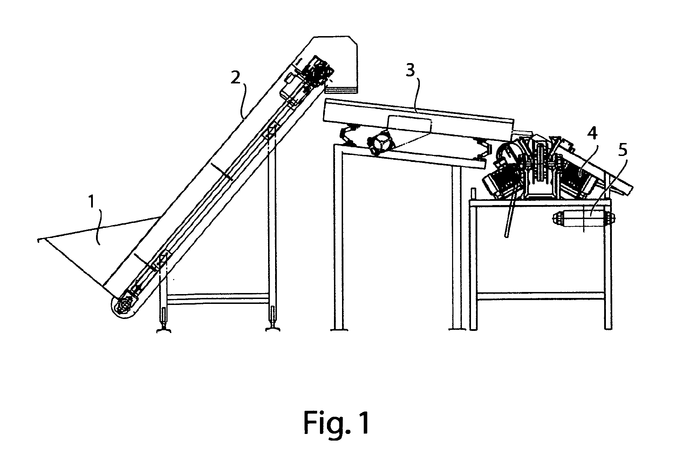

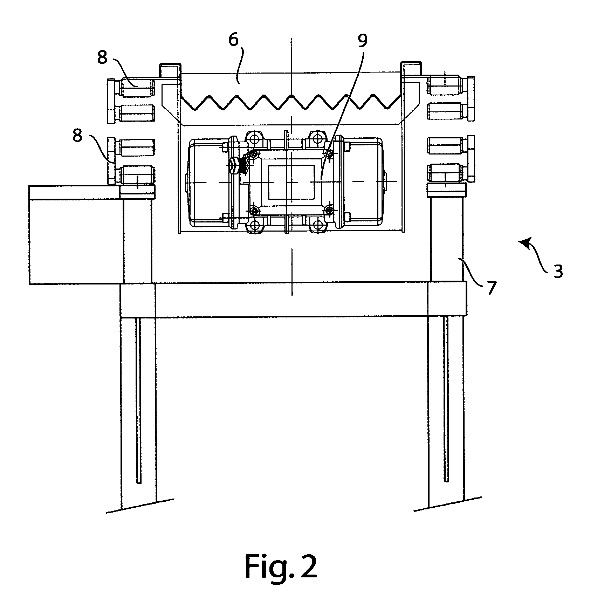

Observing first figure 1, it is shown a system for working green beans, providing a hopper 1, wherein product is discharged randomly, said product being taken by elevator 2. Green beans are automatically lifted up to the supply height of vibrating table 3 (showing in detail figure 2). Vibrating table 3 aims to align axis of green beans according to the motion direction. Thus, product reaches machine 4 according to the invention already oriented and ready for automatic working. Trimmed green beans are collected by band 5 bringing them to the following working step.

Elevator 2 has no particular features with respect to lifting means.

On the contrary, vibrating table 3 has a particular stressed V shape of vibrating plane 6, making it suitable to carry out said function. Vibrating table 6 is supported by structure 7, and provides suspension connection rods 8 and an eccentric rotating mass 9.

Wedges are provided offset along the path, to straighten green beans that are not properly oriented.

At the end of the path, all green beans are aligned within channels, ready to fall down within alveoli.

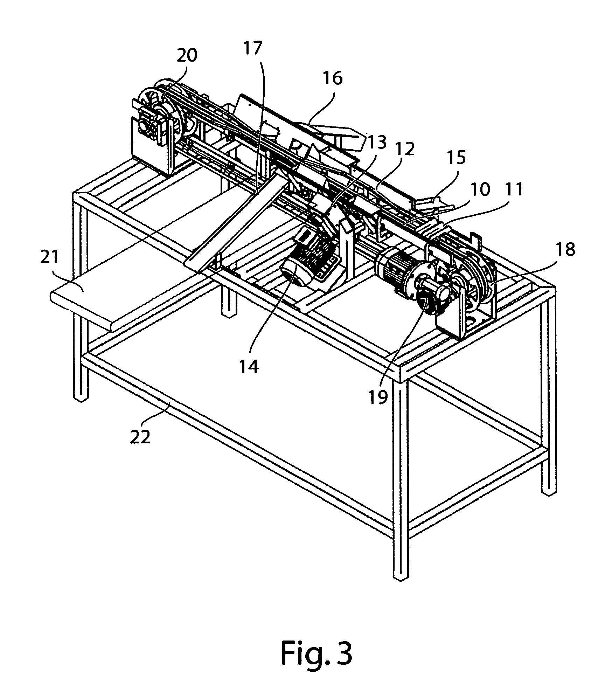

Observing now particularly figure 3, it is shown particularly the arrangement of cutting (trimming) of green beans.

Green beans with their axis oriented orthogonal with respect to the chain 10 motion direction are collected within transportation cups 11, comprised of lengthened hemi-cylindrical alveoli slightly inclined forward in the loading section in order to promote the green beans housing.

Cups 11 are hinged on transportation chain 10, so as to tilt about the axis parallel with respect to the chain 10 motion axes.

Guides 12 permits orienteering cups inclination 11 in correspondence of the different working sections, lifting one end by an action similar to the action of a mechanical cam.

Thanks to the particular shape of guides 12, transportation cups 11 are suitably orientated in such a way that one end of green bean (in this case left end according to the chain 10 motion direction) rests on first cut blade 13 cutting surface. Said blade is operated by a motor 14.

Cut end of green bean is collected and discharged on one side of the machine by a chute 15, while green bean advances along its path within the cup 11, which is dragged by chain 10.

Always in view of the action of the guide 12, cup 11 is upturned on the opposite side so as to bring the other end of green bean in touch with the second cut blade 16, provided on the opposite side of machine axis.

Other green bean end is cut in this section, said end being collected by chute 17, to be discharged laterally with respect to the machine. Finished green bean is discharged in the following section by upturning cup 11, always by the guide 12.

Cup 11 bearing chain 10 dragging pulley 18 is further shown in figure 3, provided with its own motor 19, as well as transmission pulley 20 of the same chain, collection belt 21 for the finished product and support structure 22.

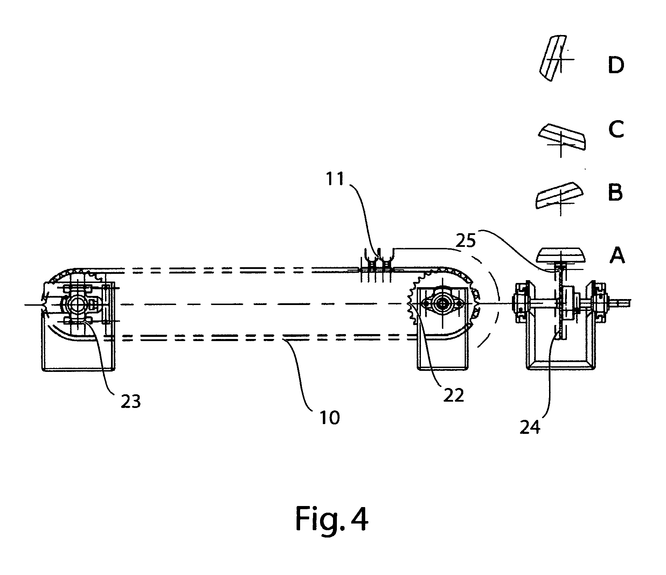

Finally, some particulars of the transportation chain 10 and of transportation cups 11 are shown in figure 4.

Particularly, it is shown drive pulley 23, on which motorization group (not shown) is applied, as well as transportation cups 11, seen from their side with respect to the chain motion (in the figure from right to left), chain 10, transmission pulley 23, support arm 24 for cup 11, on which cup 11 is pivoted by pin 25.

Various positions A, B, C, D of cup in the different working steps are shown in figure 4.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine for automatic cutting of green beans, said machine being **characterized in that** it provides blade cutting means for cutting both ends of green beans that have been properly orientated beforehand.

2. Machine for automatic cutting of green beans according to claim 1, **characterized in that** it provides, upward, a product loading apparatus and an apparatus for aligning product orthogonal with respect to the advancement axis of the same product, and downward a collection apparatus.

3. Machine for automatic cutting of green beans according to one of the preceding claims, **characterized in that** said cutting means provide cups for cutting the product, said cups being movable along motion means, that can be oriented perpendicular with respect to motion axis of said motion means, at least a cutting section, for cutting the two ends of green bean, and a discharge section for discharging finished product.

4. Machine for automatic cutting of green beans according to claim 3, **characterized in that** said motion means are comprised of a chain.

5. Machine for automatic cutting of green beans according to claim 3 or 4, **characterized in that** said cups can take different positions in the different working sections provided along the machine axis.

6. Machine for automatic cutting of green beans according to claim 5, **characterized in that** orientation of cups is determined by chain guides mounted on the edges of said cups, with an axis parallel with respect to the chain motion axis.

7. Machine for automatic cutting of green beans according to one of the preceding claims 3 - 6, **characterized in that** said at least a cutting head is comprised of two circular blades operated by a motor, said blades rotating according to opposite directions.

8. Machine for automatic cutting of green beans according to one of the preceding claims 3 - 7, **characterized in that** two cutting heads are provided, one for each end, and provided on opposite sides of the machine, eventually each provided with discharge means for cut tips or ends.

9. Machine for automatic cutting of green beans according to one of the preceding claims, **characterized in that** said alignment apparatus provides a vibrating plane with a shaped plane having a plurality of V shaped deep grooves or alveoli according to the product motion direction.
